# EUROPÄISCHE PATENTSCHRIFT

(11) **EP 1 875 053 B1**
(45) Veröffentlichungstag und Bekanntmachung des Hinweises auf die Patenterteilung: **25.02.2009**
(21) Anmeldenummer: 06724381.6
(22) Anmeldetag: 18.04.2006
(51) Int. Cl.: F01N 7/00, F01N 7/08, F16L 41/00

(54) **ABGASLEITUNGSABSCHNITT**
EXHAUST PIPE SECTION
SEGMENT DE CONDUITE D'ECHAPPEMENT

(30) Priorität: 22.04.2005 DE 102005018881
(43) Veröffentlichungstag der Anmeldung: 09.01.2008
(73) Patentinhaber: EMCON Technologies Germany (Augsburg) GmbH, 86154 Augsburg (DE)
(72) Erfinder: GRESCHER, Bernhard, 86850 Fischach (DE)
(74) Vertreter: Prinz & Partner
(86) Internationale Anmeldenummer: PCT/EP2006/003515
(87) Internationale Veröffentlichungsnummer: WO 2006/111344

(56) Entgegenhaltungen:
- DE-C1- 4 224 251
- US-A- 5 143 410

## Beschreibung

Die Erfindung betrifft einen Abgasleitungsabschnitt, insbesondere von Verbrennungsmotoren.

Bei Kfz-Verbrennungsmotoren können verschiedene Sonden zur Erfassung von Abgasparametern vorgesehen sein, beispielsweise Lambda-Sonden, Druckfühler, Temperaturfühler und dergleichen. Über diese Sonden wird beispielsweise die Einspritzung bei den Verbrennungsmotoren oder auch die Abgasnachbehandlung, z.B. die Regeneration von Rußfiltern von Dieselmotoren, gesteuert. Zur Halterung einer Sonde ist ein Sondenstutzen vorgesehen, der in der DE 42 24 251 C1 einen kugelkalottenförmigen, in die Abgasleitung teilweise hineinragenden und an der Wandung befestigten Endabschnitt besitzt. Durch diese Form läßt sich der Sondenstutzen als Standardteil herstellen, da er unter verschiedensten Winkellagen an der Wandung angeschweißt werden kann, abhängig von dem jeweiligen zur Verfügung stehenden Bauraum. Darüber hinaus können auch andere Funktionsteile als Sonden an einem Stutzen mit dem Inneren der Abgasleitung in Verbindung stehen, z.B. Druckleitungen oder Einspritzelemente.

Aufgabe der Erfindung ist es, einen Abgasleitungsabschnitt mit einem Stutzen zu schaffen, der kostengünstiger ausgeführt ist.

Der erfindungsgemäße Abgasleitungsabschnitt hat eine Wandung und einen an der Wandung befestigten Stutzen, der durch einen Wandungsdurchbruch in eine Abgasleitung ragt, wobei ein in die Abgasleitung hineinragender und an der Wandung befestigter Endabschnitt des Stutzens kontinuierlich konvex gekrümmt ist und wobei der Stutzen eine Öffnung zur Aufnahme eines Funktionsteiles, insbesondere einer Sonde, hat und im Bereich der Öffnung wenigstens einen einstückig angeformten, unbearbeiteten Befestigungsvorsprung zur Arretierung des Funktionsteils besitzt.

Dieser Befestigungsvorsprung ist vorzugsweise ein Gewinde, insbesondere ein Feingewinde.

Bislang war nur angedacht, den Stutzen mechanisch spanend zu bearbeiten, z.B. ein entsprechendes Feingewinde zu schneiden, um für eine ausreichende Dichtigkeit zur Sonde zu sorgen. Die Erfindung geht einen anderen Weg. Sie sieht vor, daß der Befestigungsvorsprung unbearbeitet, insbesondere nicht spanend bearbeitet ist. Damit können die Herstellungskosten des Stutzens und damit des gesamten Abgasleitungsabschnittes reduziert werden.

Gemäß einer Variation der Erfindung ist der Stutzen auch im Bereich der Außenseite des Endabschnittes unbearbeitet.

Der Stutzen kann sogar insgesamt unbearbeitet sein, wodurch sich der Herstellungsaufwand nochmals reduzieren läßt.

Es sind mehrere verschiedene Ausführungen des Stutzens möglich.

Gemäß einer ersten Ausführungsform ist der Stutzen ein pulvermetallurgisches Erzeugnis, z.B. ein Sintererzeugnis. Hier lassen sich sehr glatte Oberflächen und exakte Vorsprünge ausbilden.

Eine zweite Ausführungsform sieht vor, daß der Stutzen ein Gußerzeugnis, insbesondere ein Feingußerzeugnis ist. Ggf. ist es hier noch erforderlich, daß im Bereich des Endabschnittes evtl. auftretende Gußnasen durch Entgraten entfernt werden.

Bei einer dritten Ausführungsform wird der Stutzen aus Metallschaum hergestellt. Der Vorteil des Metallschaums besteht darin, daß seine Wärmeleitfähigkeit gegenüber Vollmaterial herabgesetzt ist.

Allen diesen Herstellungsverfahren ist gemeinsam, daß der Stutzen in einer Form erzeugt wird und sich damit der Befestigungsvorsprung bereits bei der Herstellung des Stutzens in engen Grenzen mittels der Form erzeugen läßt.

Die zuvor erwähnten Verfahren zur Herstellung des Stutzens lassen es z.T. auch zu, den Stutzen mit Abschnitten unterschiedlicher Materialeigenschaften herzustellen. Es läßt sich gerade beim pulvermetallurgischen Herstellungsverfahren eine außenseitige Schicht im Bereich des Endabschnittes herstellen, die z.B. ein gutes Anlöten des Stutzens an die Wandung zuläßt.

Der Stutzen kann im Bereich seiner Außenumfangsfläche verglichen mit dem Bereich des Vorsprungs, allgemein gesagt, temperaturbeständiger sein und/oder eine geringere mechanische Festigkeit und/oder eine geringere Dichte aufweisen.

Was den Endabschnitt anbelangt, so sollte dieser ähnlich wie im Stand der Technik ausgeführt sein, nämlich dahingehend, daß er unter verschiedenen Winkellagen relativ zur Wandung am Rand des Wandungsdurchbruchs unmittelbar befestigt werden kann, und zwar ohne Vorsehen eines Adapterstückes oder dergleichen. Die Wandung im Bereich des Durchbruchs sollte hierbei ebenfalls ohne spezifische Bearbeitung im Sinne einer spezifischen, auf eine gewünschte Winkellage abgestellten Formgebung ausgeführt sein.

Der Stutzen selbst wird durch Schweißen, Löten oder Kleben an der Wandung befestigt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht eines aufgeschnittenen erfindungsgemäßen Abgasleitungsabschnitts mit daran befestigter Sonde,
- Figur 2 eine Seitenansicht des Abgasleitungsabschnitts nach Figur 1,
- Figur 3 eine stirnseitige Ansicht eines Teils des Abgasleitungsabschnitts nach Figur 1, ohne die Sonde, und
- Figur 4 eine Längsschnittansicht durch den beim erfindungsgemäßen Abgasleitungsabschnitt eingesetzten Stutzen.

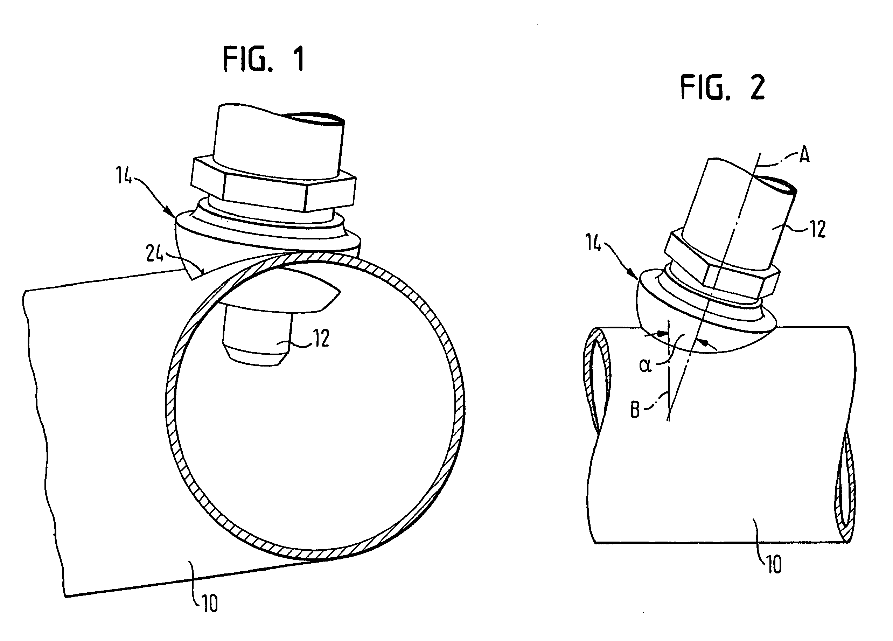

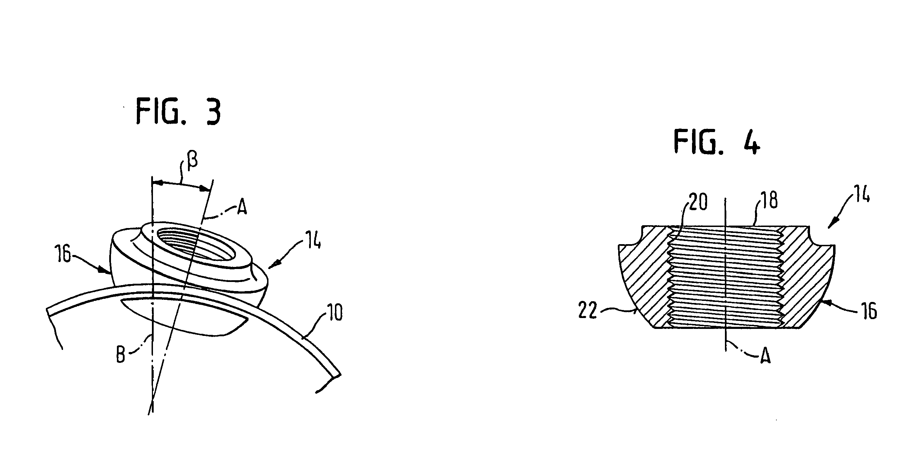

In Figur 1 ist ein Abgasleitungsabschnitt eines Kfz-Verbrennungsmotors dargestellt. Die gesamte Abgasleitung wird durch ein Abgasrohr mit einer zylindrischen Wandung 10 definiert. In das Innere des Rohres, d.h. in die Abgasleitung, ragt ein Funktionsteil in Form einer Sonde 12, vorliegend eine Lambda-Sonde. Das Funktionsteil kann aber auch eine Druckleitung oder ein Einspritzelement sein. Der Abgasleitungsabschnitt hat zur Positionierung und Arretierung der Sonde 12 einen Stutzen 14, wie er im Detail in Figur 4 gezeigt ist.

Der Stutzen 14 besitzt einen kontinuierlich konvex gekrümmten Endabschnitt 16 und eine zentrische Öffnung 18 mit einem Innengewinde 20, das insbesondere ein Feingewinde ist.

Der konvex gekrümmte Endabschnitt 16 ist im dargestellten Ausführungsbeispiel kugelkalottenförmig. Er kann aber auch eine andere zur Mittelachse A symmetrische oder unsymmetrische Form haben, z.B. im weitesten Sinne ei- oder kuppelförmig ausgeführt sein. Da ein Teil dieses Endabschnitts 16, wie in Figur 1 zu sehen ist, in das Innere der Abgasleitung ragt, sollte die Krümmung des Endabschnitts 16 im Hinblick auf einen möglichst geringen Strömungswiderstand und geringe Turbulenzen hin ausgeführt sein.

Der Stutzen 14 ist vorzugsweise ein pulvermetallurgisches, z. B. durch Sintern hergestelltes einstückiges Erzeugnis. Der Befestigungsvorsprung, hier das Innengewinde 20, zur Befestigung des Sensors 12, wird an der Oberfläche ohne Nachbearbeitung (insbesondere ohne spanende mechanische Bearbeitung) unmittelbar beim Sintern oder dergleichen hergestellt, d. h. nachdem der Vorsprung erzeugt wurde, wird nicht mehr an seiner Oberfläche nachbearbeitet.

Auch die Außenumfangsfläche 22 des konvexen Endabschnitts 16 bleibt unbearbeitet. Bei der gezeigten Ausführungsform ist sogar überhaupt keine Außenfläche des Stutzens 14 bearbeitet, was den Stutzen 14 sehr günstig in seiner Herstellung macht.

Der Stutzen 14 kann aber auch durch Gießen, insbesondere durch Feingießen hergestellt sein oder, alternativ hierzu, aus Metallschaum bestehen.

Durch diese beschriebenen Verfahren lassen sich Abschnitte des Stutzens 14 mit unterschiedlichen Materialeigenschaften herstellen. Beispielsweise kann der Stutzen 14 im Bereich der Außenumfangsfläche 22, mit der er auch in das Innere der Abgasleitung ragt, temperaturbeständiger als im Bereich des Gewindes sein. Im Bereich der Außenumfangsfläche 22 könnte auch eine geringere mechanische Festigkeit und/oder eine geringere Dichte als im Bereich des Innengewindes oder in anderen Bereichen vorgesehen werden, abhängig von den in den jeweiligen Abschnitten notwendigen Materialeigenschaften.

Durch die konvexe Ausbildung des Endabschnitts läßt sich der Stutzen 14 in unterschiedlichen Winkellagen relativ zur Wandung 10 in dieser einbauen. Die Mittelachse B geht zentral durch den Durchbruch 24 und schneidet die Längsachse der Abgasleitung. In Seitenansicht (Fig. 2) ist zu sehen, daß hier die Mittelachse A einen Winkel α zur Mittelachse B einschließt, und in axialer Ansicht (Fig. 3) schließen die Achsen A und B einen Winkel β miteinander ein. Die Winkel α und α können in einem Bereich von etwa -20 bis +20° liegen.

Die Herstellung des Durchbruchs 24 erfolgt vorzugsweise durch Laserschneiden, wobei die Wandung 10 nicht abgeflacht werden muß, um einen ausreichend guten Sitz für den Stutzen 14 zu bieten.

Der Stutzen 14 wird in die gewünschte Winkellage gebracht und unmittelbar am Rand des Durchbruchs 24 an die Wandung 10 angeschweißt, angelötet oder angeklebt. Das Schweißen kann z.B. durch Kondensatorentladungsschweißen oder durch Reibschweißen beim Eindrücken des Stutzens 14 in die Wandung 10 erfolgen.

## Patentansprüche

1. Abgasleitungsabschnitt, mit
einer Wandung (10) und
einem an der Wandung (10) befestigten Stutzen (14), der durch einen Wandungsdurchbruch (24) in eine Abgasleitung ragt,
wobei ein in die Abgasleitung hineinragender und an der Wandung (10) befestigter Endabschnitt (16) des Stutzens (14) kontinuierlich konvex gekrümmt ist und
wobei der Stutzen (14) eine Öffnung (18) zur Aufnahme eines Funktionsteils, insbesondere einer Sonde (12), hat und im Bereich der Öffnung (18) wenigstens einen einstückig angeformten, unbearbeiteten Befestigungsvorsprung zur Arretierung des Funktionsteils besitzt.

2. Abgasleitungsabschnitt nach Anspruch 1, **dadurch gekennzeichnet, daß** der Befestigungsvorsprung ein Gewinde (20) ist.

3. Abgasleitungsabschnitt nach Anspruch 1 oder 2, **dadurch gekennzeichnet, daß** der gesamte Stutzen (14) unbearbeitet ist.

4. Abgasleitungsabschnitt nach einem der vorhergehenden Ansprüche, **dadurch gekennzeichnet, daß** der Stutzen (14) ein pulvermetallurgisches Erzeugnis ist.

5. Abgasleitungsabschnitt nach einem der Ansprüche 1 bis 3, **dadurch gekennzeichnet, daß** der Stutzen (14) ein Gußerzeugnis, insbesondere Feingußerzeugnis ist.

6. Abgasleitungsabschnitt nach einem der Ansprüche 1 bis 3, **dadurch gekennzeichnet, daß** der Stutzen (14) aus einem Metallschaum ist.

7. Abgasleitungsabschnitt nach Anspruch 6, **dadurch gekennzeichnet, daß** der Stutzen (14) Abschnitte mit unterschiedlichen Materialeigenschaften aufweist.

8. Abgasleitungsabschnitt nach einem der vorhergehenden Ansprüche, **dadurch gekennzeichnet, daß** der Stutzen (14) im Bereich seiner Außenumfangsfläche (22) temperaturbeständiger ist und/oder eine geringere mechanische Festigkeit und/oder eine geringere Dichte als im Bereich des Vorsprungs aufweist.

9. Abgasleitungsabschnitt nach einem der vorhergehenden Ansprüche, **dadurch gekennzeichnet, daß** der Endabschnitt (16) so konvex ausgeführt ist, daß der Stutzen (14) unter verschiedenen Winkellagen relativ zur Wandung (10) am Rand des Wandungsdurchbruchs (24) befestigt werden kann.

10. Abgasleitungsabschnitt nach einem der vorhergehenden Ansprüche, **dadurch gekennzeichnet, daß** der Stutzen (14) durch Schweißen, Löten oder Kleben an der Wandung (10) befestigt ist.

## Claims

1. An exhaust gas pipe section, comprising
a wall (10) and
a connecting piece (14) which is fastened to the wall (10) and projects through a wall opening (24) into an exhaust gas pipe,
an end section (16) of the connecting piece (14) projecting into the exhaust gas pipe, being fastened to the wall (10) and having a continuously convex curvature, and
the connecting piece (14) having an opening (18) for receiving a functional part, in particular a probe (12), and, in the region of the opening (18) having at least one unworked fastening protrusion integrally formed thereon for arresting the functional part.

2. The exhaust gas pipe section according to claim 1, **characterized in that** the fastening protrusion is a thread (20).

3. The exhaust gas pipe section according to claim 1 or 2, **characterized in that** the entire connecting piece (14) is unworked.

4. The exhaust gas pipe section according to any of the preceding claims, **characterized in that** the connecting piece (14) is a powder-metallurgical product.

5. The exhaust gas pipe section according to any of claims 1 to 3, **characterized in that** the connecting piece (14) is a cast product, in particular a precision casting.

6. The exhaust gas pipe section according to any of claims 1 to 3, **characterized in that** the connecting piece (14) is made of a metal foam.

7. The exhaust gas pipe section according to claim 6, **characterized in that** the connecting piece (14) has sections with differing material properties.

8. The exhaust gas pipe section according to any of the preceding claims, **characterized in that** in the region of its outer peripheral surface (22), the connecting piece (14) has a higher temperature resistance and/or a lower mechanical strength and/or a lower density than in the region of the protrusion.

9. The exhaust gas pipe section according to any of the preceding claims, **characterized in that** the end section (16) is configured to be so convex that the connecting piece (14) can be fastened at the rim of the wall opening (24) with different angular orientations relative to the wall (10).

10. The exhaust gas pipe section according to any of the preceding claims, **characterized in that** the connecting piece (14) is fastened to the wall (10) by welding, soldering or gluing.

## Revendications

1. Segment de conduite d'échappement, comportant
une paroi (10) et
une tubulure (14) fixée sur la paroi (10), qui fait saillie dans une conduite d'échappement à travers une percée de paroi (24),
un segment d'extrémité (16) de la tubulure (14), qui fait saillie dans la conduite d'échappement et qui est fixé sur la paroi (10), est coudé de forme convexe de façon continue, et
la tubulure (14) ayant une ouverture (18) destinée à recevoir une pièce fonctionnelle, en particulier une sonde (12) et possédant dans la région de l'ouverture (18) au moins une saillie de fixation conformée d'un seul tenant et non façonnée pour arrêter la pièce fonctionnelle.

2. Segment de conduite d'échappement selon la revendication 1, **caractérisé en ce que** la saillie de fixation est un pas de vis (20).

3. Segment de conduite d'échappement selon la revendication 1 ou 2, **caractérisé en ce que** toute la tubulure (14) est non façonnée.

4. Segment de conduite d'échappement selon l'une des revendications précédentes, **caractérisé en ce que** la tubulure (14) est un produit de métallurgie des poudres.

5. Segment de conduite d'échappement selon l'une des revendications précédentes, **caractérisé en ce que** la tubulure (14) est un produit moulé de précision.

6. Segment de conduite d'échappement selon l'une des revendications 1 à 3, **caractérisé en ce que** la tubulure (14) est en mousse de métal.

7. Segment de conduite d'échappement selon la revendication 6, **caractérisé en ce que** tubulure (14) présente des segments avec différentes propriétés de matériau.

8. Segment de conduite d'échappement selon l'une des revendications précédentes, **caractérisé en ce que** dans la région de sa surface périphérique (22), la tubulure (14) est plus résistante aux variations de température et/ou présente une solidité mécanique plus faible et/ou une densité plus faible que dans la région de la saillie.

9. Segment de conduite d'échappement selon l'une des revendications précédentes, **caractérisé en ce que** le tronçon d'extrémité (16) est réalisé aussi convexe que la tubulure (14) peut être fixée sur le bord de la percée de paroi (24) sous différentes positions angulaires par rapport à la paroi (10).

10. Segment de conduite d'échappement selon l'une des revendications précédentes, **caractérisé en ce que** la tubulure (14) est fixée par soudage, brasage ou collage sur la paroi (10).
